Europäisches Patentamt

European Patent Office

Office européen des brevets

(11) Publication number: **0 362 912**
**A1**

## (12) EUROPEAN PATENT APPLICATION

(21) Application number: 89202153.6

(22) Date of filing: 25.08.89

(51) Int. Cl.5: **B62K 13/00**

(30) Priority: 05.09.88 NL 8802182

(43) Date of publication of application:
**11.04.90 Bulletin 90/15**

(84) Designated Contracting States:
**BE CH DE ES FR GB IT LI LU NL**

(71) Applicant: **Bannink, Cornelis Johannes**
**Hoofdweg 156**
**NL-1175 LD Lijnden(NL)**

(72) Inventor: **Bannink, Cornelis Johannes**
**Hoofdweg 156**
**NL-1175 LD Lijnden(NL)**

(74) Representative: **de Boer, Hindrik Geert Jan et al**
**De Boer & Wigman De Lairessestraat 133**
**NL-1075 HJ Amsterdam(NL)**

(54) **Vertically adjustable vehicle.**

(57) Vertically adjustable vehicle, in particular a bicycle, having a frame (2) and at least two wheels (3), which frame is provided with at least one piston/cylinder (8, 9) device, by means of which the vehicle can be vertically adjusted while supplying or discharging a medium to or from the at least one piston/cylinder device.

Fig 1

EP 0 362 912 A1

# Vertically adjustable vehicle

The invention relates to a vertically adjustable vehicle, in particular a bicycle, having a frame and at least two wheels.

Such a vehicle in the shape of a bicycle is generally known. With the known bicycles the vertical adjustability is often realised in that tubular bicycle frame parts are connected together via so-called pin-hole connections and/or telescopic connections. The vertical adjustability of a bicycle offers the advantage that every user of such a bicycle can adjust the height thereof to his/her physical height. As a result it will be possible to ride the bicycle in a comfortable and ergonomically sound manner. The vertical adjustability may furthermore constitute a playful aspect of such a bicycle.

A drawback of the known vehicle is that its vertical adjustment is a laborious activity, making it necessary for the user to alight from the known bicycle in order to adjust its height.

The object of the invention is to provide a vehicle which can be vertically adjusted in a very efficient and playful manner, without the user having to alight.

In order to accomplish that objective a vehicle of the kind mentioned in the preamble is according to the invention characterized in that the frame is provided with at least one piston/cylinder device, by means of which the vehicle can be vertically adjusted while supplying or discharging a medium to or from the at least one piston/cylinder device. Preferably the frame is provided with two piston/cylinder devices, one of which being connected to a rear fork and the other being connected to a front fork of the frame. The medium which is used may be a gas, preferably air, or a fluid.

One embodiment of a vehicle according to the invention, whereby the frame is hollow, is characterized in that the medium is at least partly to be found in the hollow frame, whereby the medium can be led from or to the hollow frame to or from the at least one piston/cylinder device for vertically adjusting the vehicle.

A further embodiment of a vehicle according to the invention, whereby the frame is hollow, is characterized in that the medium is at least partly to be found in a reservoir connected with the frame, whereby the medium can be led from or to the reservoir, via the frame, to or from the at least one piston/cylinder device for vertically adjusting the vehicle.

The medium can be pressurized under the influence of the action of the pedals of the vehicle and/or of a pump connected with the frame. Possibly springing elements, such as compression springs, may be used in order to urge the vehicle to one of its final positions, whereby the medium opposes said spring action.

The invention will be further explained with reference to a drawing, in which:

Figure 1 is a side view of a bicycle according to the invention, in a lowermost position;

Figure 2 is a side view of a bicycle according to the invention, whereby the front has been vertically adjusted; and

Figure 3 is a side view of a vehicle according to the invention, whereby the front and the rear have been vertically adjusted.

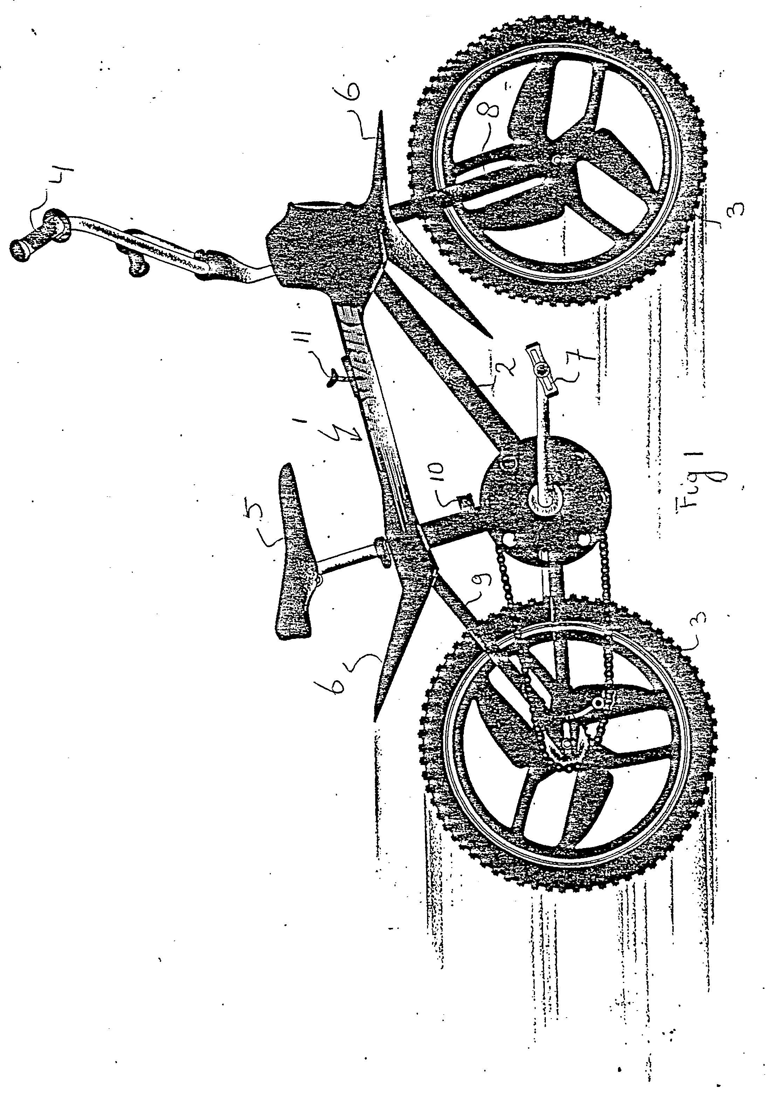

Figure 1 illustrates a vertically adjustable verhicle in the shape of a bicyle 1 having a hollow frame 2, two wheels 3, handlebars 4, a saddle 5, mudguards 6 and pedals 7. The hollow frame 2 is provided with two piston/cylinder devices 8, 9, one device 9 being connected with a rear fork and the other device 8 being connected to a front fork of the hollow frame 2. In order to vertically adjust the bicycle 1 a medium, e.g. air, which is at least partly to be found in the hollow frame 2, is supplied to the piston/cylinder devices 8, 9 by means of a pump 10 which is connected with the hollow frame 2. Of course the pump 10 (as well as a piston/cylinder device 8, 9) may also be located in the hollow frame 2, e.g. in the extension of the saddle pin. By means of a handle 11 a user of the vehicle 1 can determine if, and if so, to what extent, the front and/or the rear of the vehicle 1 is/are to be vertically adjusted. The medium may hereby be "stored" under pressure in the frame 2 by means of the pump 10 or the pedals 7, whereby a user of the vehicle 1 can supply or discharge the medium to or from a piston/cylinder device 8, 9 by means of the handle 11.

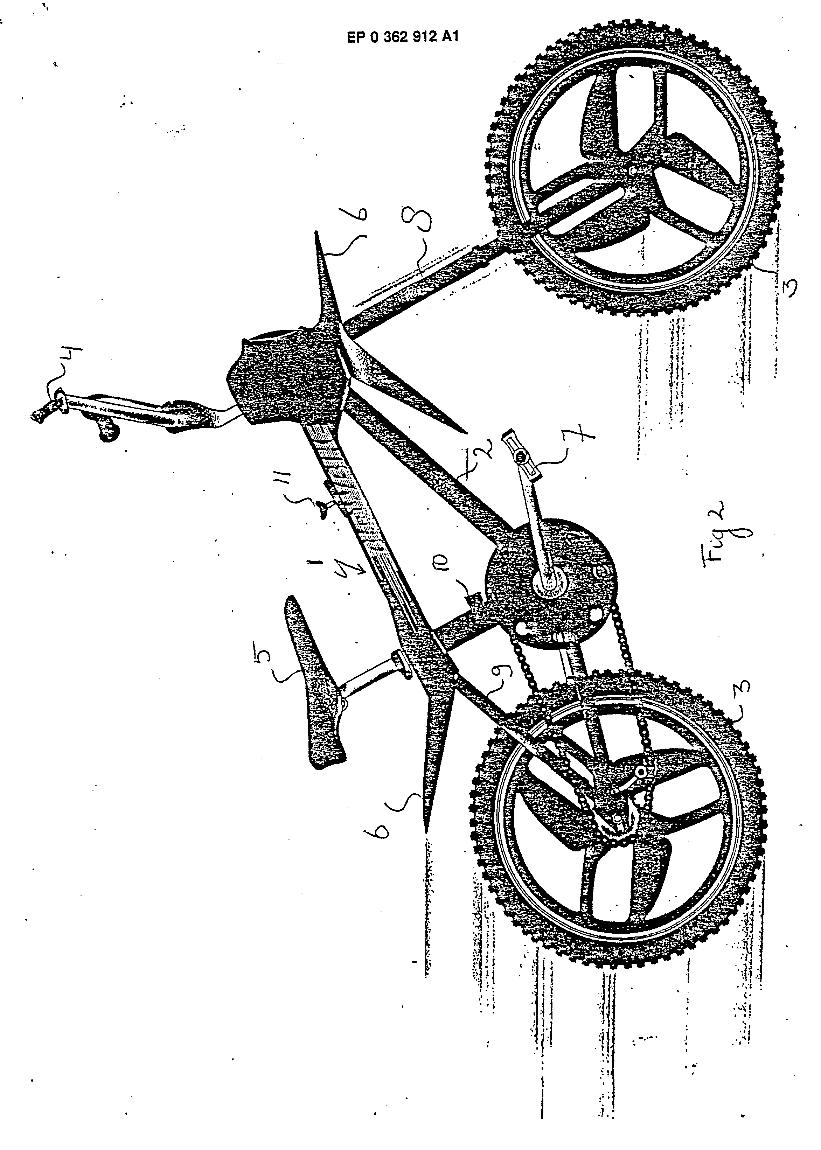

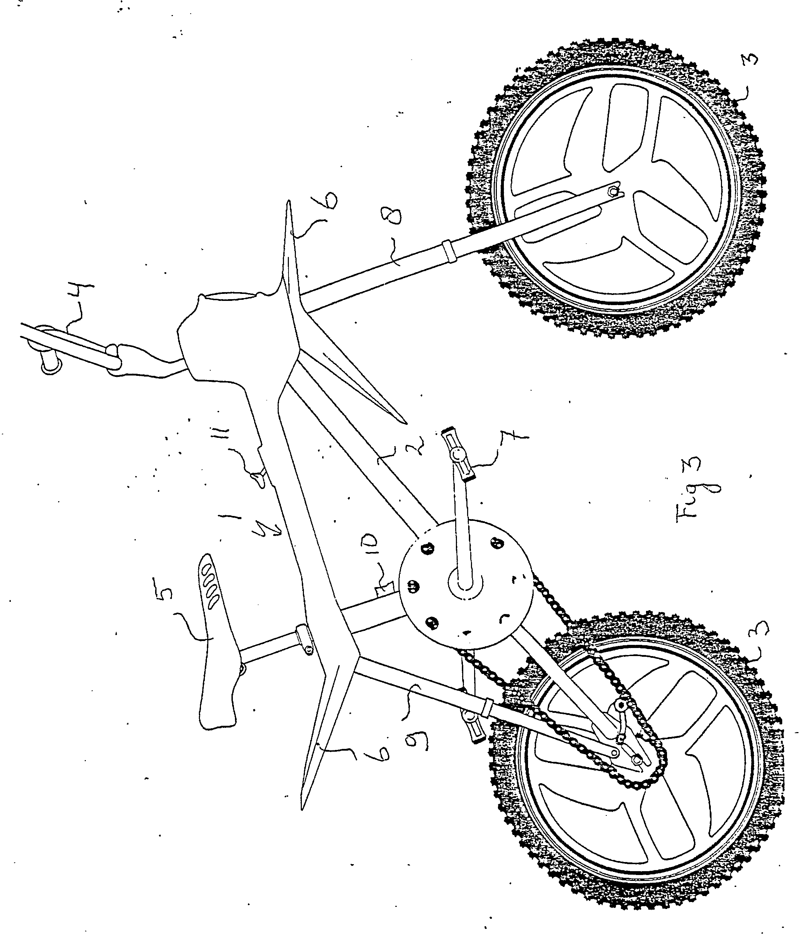

Figures 2 and 3, respectively, illustrate a bicycle according to the invention, whereby the front casu quo the front and the rear has/have been vertically adjusted by means of the respective piston/cylinder devices 8, 9. The parts of the bicycle 1 shown in the Figures 2 and 3 that correspond with those of the bicycle 1 shown in Figure 1, are indicated with the same reference numbers.

## Claims

1. Vertically adjustable vehicle, in particular a bicycle, having a frame and at least two wheels, characterized in that the frame is provided with at least one piston/cylinder device, by means of which the vehicle can be vertically adjusted while supplying or discharging a medium to or from the at least one piston/cylinder device.

2. Vertically adjustable vehicle according to claim 1, whereby the frame is hollow, characterized in that the medium is at least partly to be found in the hollow frame, whereby the medium can be led from or to the hollow frame to or from the at least one piston/cylinder device for vertically adjusting the vehicle.

3. Vertically adjustable vehicle according to claim 1 or 2, whereby the frame is hollow, characterized in that the medium is at least partly to be found in a reservoir connected with the frame, whereby the medium can be led from or to the reservoir, via the frame, to or from the at least one piston/cylinder device for vertically adjusting the vehicle.

4. Vertically adjustable vehicle according to claim 1, 2 or 3, characterized in that the medium can be pressurized under the influence of the action of the pedals of the vehicle.

5. Vertically adjustable vehicle according to claim 1, 2, 3 or 4, characterized in that the medium can be pressurized under the influence of the action of a pump which is connected with the frame.

6. Vertically adjustable vehicle according to any one of the preceding claims, characterized in that the frame is provided with at least two piston/cylinder devices, one of which being connected to a rear fork and the other being connected to a front fork of the frame.

7. Vertically adjustable vehicle according to any one of the preceding claims, characterized in that the medium is a gas or a fluid.

8. Vertically adjustable vehicle according to any one of the preceding claims, characterized in that the vehicle is provided with a means, e.g. a handle, by means of which a user of the vehicle can determine if, and if so, to what extent the front and/or the rear of the vehicle is/are to be vertically adjusted.

9. Vertically adjustable vehicle according to any one of the preceding claims, characterized in that the medium can be stored under pressure in the frame, by means of the action of a pump connected with the frame or by means of the action of the pedals of the vehicle, whereby a user of the vehicle can supply or discharge the medium to or from a piston/cylinder device by means of a means.

Fig 1

EP 0 362 912 A1

Fig 2

Fig 3

EP 0 362 912 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-2 604 140  (BOBARD JEUNE)<br>* Figures 1-7; page 2, line 36 - page 7, line 14 *<br>--- | 1-9 | B 62 K  13/00 |
| A | BE-A- 744 578  (L'AVENIR)<br>* Figures 1-9; page 3, line 26 - page 7, line 29 *<br>--- | 1 | |
| A | FR-A-2 422 545  (NOUACER)<br>* Figures 1-10; page 1, lines 1-36 *<br>--- | | |
| A | FR-A- 684 306  (AVIZOU)<br>* Figures 1,2; page 1 *<br>--- | 1 | |
| A | BE-A- 671 391  (CITROEN)<br>* Figures 1,2; pages 1,2 * & NL-A-6 514 907<br>----- | 1 | |

TECHNICAL FIELDS
SEARCHED (Int. Cl.4)

B 62 K

The present search report has been drawn up for all claims

| Place of search | Date of completion of the search | Examiner |
|---|---|---|
| THE HAGUE | 13-12-1989 | VANNESTE M.A.R. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P0401)